# FASCICULE DE BREVET EUROPEEN

(11) **EP 0 876 945 B1**
(45) Date de publication et mention de la délivrance du brevet: **24.10.2001**
(21) Numéro de dépôt: 98401099.1
(22) Date de dépôt: 06.05.1998
(51) Int. Cl.: B61D 19/02, B61D 19/00, B60J 5/06

(54) **Dispositif d'accrochage de vantail de porte, porte pourvue de ce dispositif et véhicule ferroviaire ainsi équipé**
Türblattbefestigungsvorrichtung, damit versehene Tür und damit ausgerüstetes Schienfahrzeug
Doorleaf holding device, door with such a device and railway verhicle comprsing same

(30) Priorité: 09.05.1997 FR 9705726
(43) Date de publication de la demande: 11.11.1998
(73) Titulaire: FAIVELEY TRANSPORT, 93200 Saint-Denis (FR)
(72) Inventeur: Favrel, Michel, 94170 Le Perreux sur Marne (FR); Tuslane, Jean, 37270 Montlouis sur Loire (FR); Carrion Eselta, Juan, Tarragona (ES)
(74) Mandataire: Derambure, Christian

(56) Documents cités:
- EP-A- 0 400 188
- EP-A- 0 438 944
- FR-A- 2 094 969
- US-A- 3 473 266
- US-A- 3 981 203
- US-A- 5 022 702

## Description

L'invention concerne le domaine technique des portes en particulier pour véhicules ferroviaires, avec au moins un vantail apte, en position fermée, à obturer une baie dans une paroi du véhicule.

Elle a plus précisément pour objets un dispositif d'accrochage de vantail de porte, une porte pourvue de ce dispositif et un véhicule ferroviaire équipé d'au moins un tel dispositif et/ou porte.

Dans les exemples, l'invention est appliquée à une porte double, dont chaque vantail suit une trajectoire dite "louvoyante-coulissante", sous l'effet de moyens de motorisation.

Mais des portes à un ou plusieurs vantaux, déplaçables suivant d'autres trajectoires, permettant ou non un emboîtement dans la baie, sont également dans le champs de l'invention.

Il en va de même des portes à ouverture et/ou fermeture manuelle.

Citons des documents du domaine technique de l'invention.

Le document DE-B-2.219.176 décrit un stabilisateur de torsion pour porte coulissante, ayant des glissières téléscopiques articulées sur au moins un levier pivotant, avec des plots de palier fixes.

Le document FR-A-2.294.306 décrit une porte à mouvement coulissant.

Le document EP-A-001.956 décrit un dispositif de guidage et de commande pour porte coulissante.

Le document GB-A-2.159.208 décrit un assemblage de porte entraînée au moyen d'une courroie guidée autour de rouleaux déflecteurs.

Le document FR-A-2.621.879 décrit une porte louvoyante-coulissante, avec une barre de conjugaison.

L'état de la technique connu présente des inconvénients.

Par exemple, le document EP-A-400.188 décrit une porte double dans laquelle les réglages des constituants assurant le positionnement de chaque vantail, ne peuvent être effectués qu'après montage de chaque vantail sur le véhicule.

D'après le document GB-A-2.159.208 aussi, les réglages des constituants assurant le positionnement de chaque vantail ne peuvent être effectués qu'après montage de chaque vantail sur le véhicule.

De manière générale dans les structures connues, la plupart des guidages ou positionnements du vantail, voire leur totalité, ne peuvent être réglés ou ajustés qu'à l'issue du montage complet de chaque vantail sur le véhicule.

Par conséquent, ces réglages doivent être à nouveau effectués, ou du moins vérifiés, dès qu'un vantail est démonté, par exemple pour des raisons d'entretien.

En outre, dans les structures connues, il est nécessaire de soutenir chaque vantail en position durant quasiment toute son opération de montage.

Cela est pénible.

D'autant plus que les vantaux des structures connues, qui supportent ou intègrent notamment plusieurs guidages tels que rampes, sont particulièrement lourds et encombrants.

L'invention vise à résoudre ces inconvénients, notamment.

Elle vise à obtenir un dispositif d'accrochage de vantail qui permette de rendre plus rapide, plus aisé et moins pénible le montage d'au moins un vantail de la porte.

Notamment, l'invention doit offrir une bonne accessibilité pour un opérateur à des moyens d'immobilisation du vantail accroché, par exemple à des vis de serrage.

Elle doit également rendre possible, avec un faible nombre de constituants simples, un blocage sûr de chaque vantail en position fermée.

A cet effet, un premier objet de l'invention est un dispositif d'accrochage d'au moins un vantail par exemple louvoyant-coulissant, destiné à une porte d'obturation d'une baie ménagée dans une paroi de véhicule ferroviaire.

Ce dispositif comporte un système unitaire de positionnement du vantail, présentant les caractéristiques de la Revendication 1.

Par exemple la face d'appui fait saillie en élévation d'au moins un plan de localisation transversale en formant un tenon destiné à être reçu par une gorge comlémentaire du vantail et/ou au moins un plan de localisation fait saillie en élévation de la face d'appui en formant une gorge destinée à recevoir une saillie complémentaire formant tenon du vantail.

Les moyens de solidarisation du système d'accrochage (25) comprennent au moins :
une forme longitudinale de localisation transversale et/ou d'élévation, à distance transversalement d'une enveloppe intérieure du vantail et apte à être logée dans et/ou à recevoir une partie sensiblement complémentaire des moyens de suspension du vantail ;
ainsi que des moyens de mise à demeure, par exemple démontables.

Par exemple la forme longitudinale de localisation est saillante, intérieure et apte à être logée dans une cavité complémentaire d'une face externe d'un rail de glissière téléscopique montée sur les moyens de suspension, tandis que les moyens de mise à demeure comprennent des vis transversales.

Les moyens d'immobilisation du système de positionnement comportent une surface d'élévation intérieure, sensiblement au droit transversalement d'une enveloppe intérieure du vantail, et par exemple avec des orifice transversaux en vue de l'engagement de vis de serrage.

Selon une réalisation, le système de positionnement comporte en outre au moins une gouttière longitudinale, sensiblement en forme de "U" et débouchant suivant une direction d'élévation, par exemple vers le bas pour un "U" renversé.

Cette gouttière étant destinée à recevoir au moins un galet à l'extrémité libre transversale extérieure d'un levier de moyens de guidage, ces moyens étant éventuellement reliés à des moyens de conjugaison de bords longitudinaux inférieur et supérieur du vantail, pour une porte de destination louvoyante-coulissante.

Un deuxième objet de l'invention est une porte équipée d'au moins un dispositif d'accrochage tel qu'évoqué.

Son vantail comporte au moins :
un tenon et/ou une gorge complémentaire aux moyens d'accrochage ;
ainsi qu'une surface de fixation coopérant avec les moyens d'immobilisation du système de positionnement.

Elle comporte au moins un vantail formant panneau d'obturation, par exemple ce vantail comprend un cadre en profilés d'aluminium et/ou une vitre éventuellement montée directement sur le système de positionnement.

Selon une réalisation, il s'agit d'une porte motorisée qui comporte un dispositif opérateur comportant les moyens de suspension, des moyens de guidage longitudinal et/ou transversal, et éventuellement des moyens de motorisation du vantail.

Alors, les moyens de solidarisation du système de positionnement sont mis à demeure, par exemple de manière démontable, sur une partie mobile du dispositif opérateur, par exemple à un rail de glissière téléscopique.

Selon une réalisation, il s'agit d'une porte louvoyante-coulissante qui comprend en outre des moyens de guidage d'au moins un bord longitudinal du vantail.

Par exemple des moyens de conjugaison relient les moyens de guidage d'un bord longitudinal du vantail tel que supérieur, à un bord opposé en élévation tel qu'inférieur, ces moyens possédant une tige rigide d'élévation et/ou un système flexible.

Selon une réalisation, il s'agit d'une porte à double vantail , chacun étant accroché à un système de positionnement propre.

Un troisième objet de l'invention est un véhicule ferroviaire équipé d'au moins un dispositif et/ou une porte tels qu'évoqués.

L'invention est décrite plus en détail dans la description qui suit, et se réfère aux dessins annexés.

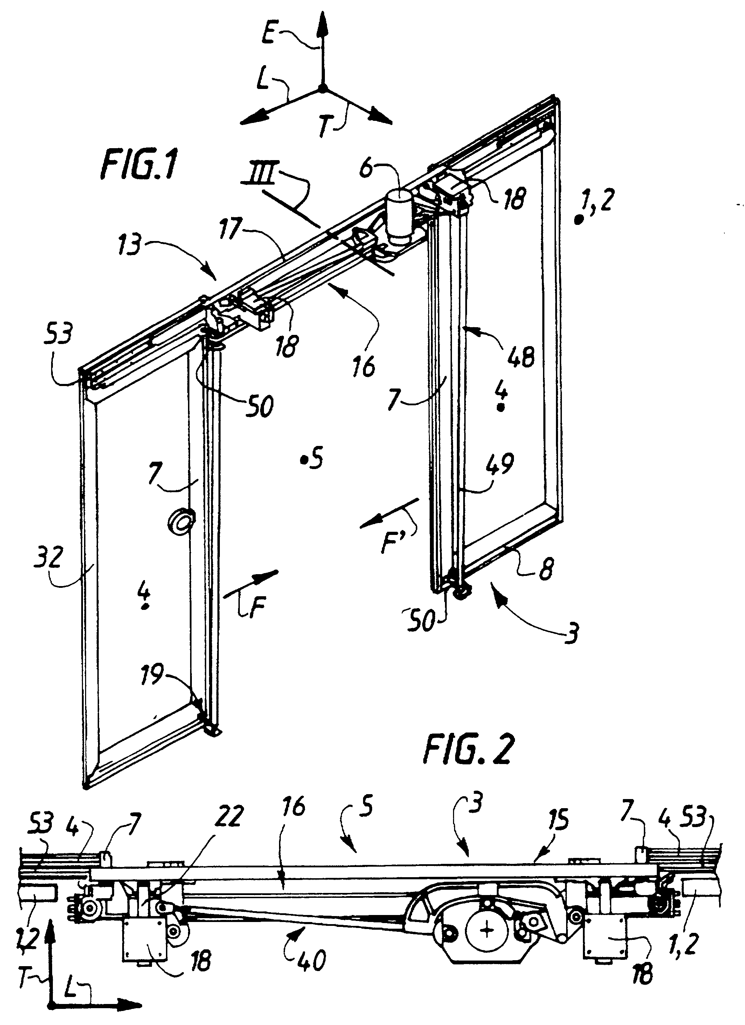

Dans ces dessins, la figure 1 est une vue d'élévation en perspective, de l'intérieur d'une porte à deux vantaux en position d'ouverture maximale, pourvue d'un dispositif d'accrochage conforme à l'invention et de moyens de conjugaison.

La figure 2 est une vue partielle suivant la direction d'élévation et de dessus, de la porte de la figure 1 en position ouverte.

La figure 3 est une vue partielle en coupe d'élévation suivant la ligne III de la figure 1, illustrant une réalisation de dispositif d'accrochage à système de positionnement monobloc, selon l'invention.

Sur les figures, sont représentées trois directions indicatives L, E et T, qui sont mutuellement perpendiculaires les unes aux autres.

La direction L dite longitudinale, est considérée comme sensiblement horizontale.

La direction T dite transversale, est aussi considérée comme sensiblement horizontale. Tandis que la direction E dite d'élévation est considérée comme étant sensiblement verticale.

Sauf dans le cas d'orientations locales, les termes "longitudinalement" et "transversalement" se rapportent respectivement aux directions longitudinale L et transversale T.

Et les termes "supérieur" et "inférieur" sont considérés suivant la direction d'élévation E, respectivement vers le haut et vers le bas.

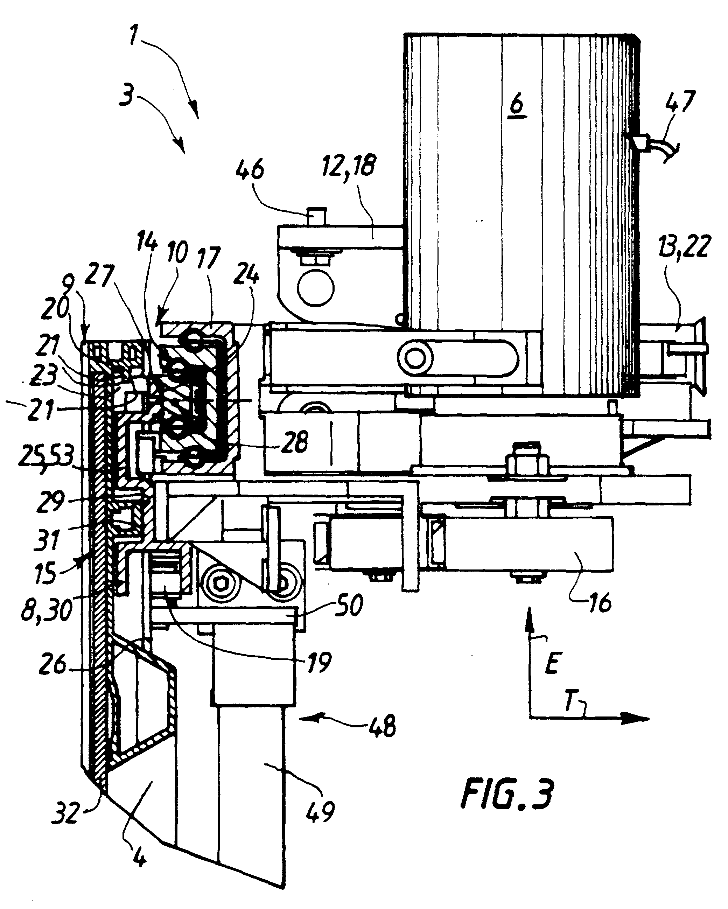

Tandis que les termes "intérieur" et "extérieur" sont considérés suivant la direction transversale T, et se rapportent sur la figure 3, respectivement aux côtés droit et gauche.

Enfin, les termes "avant" et "arrière" sont considérés suivant la direction longitudinale L, respectivement à gauche et à doite sur la figure 1.

Les directions L, E et T sont employées ici pour décrire les constituants de l'invention, dans leurs positions usuelles de mise en oeuvre.

Notamment, est considéré le cas d'une porte dans une cloison externe de véhicule ferroviaire tel que wagon, généralement étendue suivant les directions longitudinale L et d'élévation E du véhicule, ce dernier se déplaçant essentiellement suivant la direction longitudinale L.

Toutefois, la porte de l'invention peut être agencée à divers emplacements du véhicule, et par exemple à l'intérieur de l'habitacle d'un véhicule ou pour fermer une cloison d'étendue transversalement et en élévation.

Il va de soi que les constituants de l'invention peuvent prendre des positions ou orientations différentes dans l'espace, notamment lors de leur fonctionnement, fabrication, transport et stockage.

Les directions L, E et T sont donc indicatives, et données uniquement dans un but explicatif.

Sur les figures 1 et 2, la référence 1 désigne de manière générale un véhicule, et en particulier une cloison ou paroi 2 de ce véhicule 1.

Afin de permettre un accès à travers la paroi 2, celle-ci est équipée d'une baie 5.

La baie 5 comprend des montants, confondus ici avec la paroi 2 pour plus de simplicité, ainsi que deux vantaux 4.

Ces vantaux 4 font partie d'une porte 3.

Comme cela ressort des figures, il peut être considéré que la porte 3, ainsi que la cloison 2, sont essentiellement et généralement étendues suivant les directions longitudinales L et d'élévation E.

Toutefois, suivant la direction E, une porte selon un mode de réalisation non représenté de l'invention présente certaines orientations transversales.

L'invention s'applique également à des portes 3 pourvues d'un seul vantail 4, évidemment.

La baie 5 est essentiellement ou totalement dégagée par les vantaux 4, en position d'ouverture complète dite ouverte de la porte 3, comme sur la figure 1.

Tandis qu'en position de fermeture complète dite fermée, les vantaux 4 de la porte 3 sont inscrits dans la baie 5 et l'obturent.

Pour une porte coulissante, le ou les vantaux fermés obturent la baie en la masquant.

Mais ici, le contour externe de chaque vantail 4 est sensiblement complémentaire (par exemple au jeu de fonctionnement et dégagement d'ouverture/fermeture près) au contour intérieur d'une moitié de la baie 5, suivant les directions longitudinale L, d'élévation E et transversale T.

Chaque vantail 4 est sur les figures sensiblement rectangulaire, vu suivant la direction T.

Depuis sa position ouverte, chaque vantail 4 est guidé suivant l'une des flèches F et F' de sens mutuellement opposées, vers sa position fermée.

Un bord arrière 7 de chaque vantail 4 est placé en regard d'un bord avant 7 du vantail opposé dans cette position.

Pour une porte 3 à vantail 4 unique, ce bord 7 est alors face à un montant de la baie 5.

La porte 3 illustrée est une porte motorisée, c'est-à-dire pourvue de moyens de motorisation 6 pour l'entraînement des vantaux 4, en vue de leur ouverture et/ou fermeture.

Sur la figure 3 également, la référence 47 désigne une alimentation électrique flexible des moyens de motorisation 6.

Un dispositif dit opérateur de porte, est prévu sur la porte 3 motorisée.

Le dispositif opérateur comporte notamment :
- des moyens d'ancrage 12 destinés au montage de la porte 3 sur la paroi 2 ;
- des moyens ou poutre 17 de suspension des vantaux 4 ;
- des moyens de guidage linéaire transversal 13 permettant de guider les vantaux 4 à leur emboîtement de fermeture et déboîtement d'ouverture ;
- des moyens 14 de guidage longitudinal des vantaux 4 ;
- les moyens 6 de motorisation des vantaux 4, sur les figures un moteur électrique ;
- des moyens 15 de verrouillage en rotation prévus pour permettre ou empêcher le déplacement transversal de la poutre de suspension 17 ; et
- des moyens 16 de transmission longitudinale de mouvement aux vantaux 4.

On remarque que les moyens de guidage transversal 13, les moyens de guidage longitudinal 14, les moyens de motorisation 6, les moyens de verrouillage 15 et les moyens de transmission longitudinale 16 sont embarqués sur la poutre de suspension 17, elle-même reliée au véhicule 1 par les moyens d'ancrage 12.

Sur les figures, les moyens d'ancrage 12 comprennent deux platines d'appui 18.

Ces platines 18 sont en fait destinées à être placées contre une face horizontale du véhicule 1, non représenté, et rigidement fixées à celle-ci et donc à la paroi 2 qui fait partie du même ensemble structurel que la face en question.

La figure 3 montre que la poutre de suspension 17 est essentiellement constituée par un rail dit fixe des moyens de guidage longitudinal 14.

Ce rail fixe fait partie d'une glissière télescopique avec un premier et un second rails mobiles.

Chacun des premier et second rail forme une partie mobile reliée respectivement par l'intermédiaire d'un dispositif d'accochage 53, à un vantail 4.

Un tel dispositif d'accrochage 53 est décrit plus loin.

Le rail fixe des moyens de guidage longitudinal 14 est ici en forme de "U" couché à concavité tournée transversalement vers l'extérieur de la porte 3.

Ce rail est rigidement fixé à l'aide de vis, non représentées, aux moyens de guidage transversal 13.

Ces derniers, également appelés moyens de déboîtement 13, comportent d'une part deux supports de guidage dont chacun est rigidement fixé à une platine 18 des moyens d'ancrage 12.

Sur la figure 3, la référence 46 désigne des vis par l'intermédiaire desquelles les platines 18 des moyens d'ancrage 12 sont rendues solidaires de la paroi 2.

Les vis 46 ainsi que les platines 18 permettent un montage facile du dispositif opérateur sur le véhicule 1, simplement en plaçant ces platines en appui contre leur surface de réception solidaire de la paroi 2 et en procédant au serrage des vis 46.

D'autre part les moyens 13 comportent des coulisseaux 22, dont chacun est mobile transversalement dans un des support de guidage, et solidairement relié à la poutre de suspension 17.

Les coulisseaux 22 sont sur les figures cylindriques et forment un guidage linéaire, rectiligne et transversal.

Sur la figure 2, on remarque que la porte double 3 comprend un agencement articulé de liaison 40.

L'agencement 40 relie un des moyens de guidage transversal 13, à un autre qui est longitudinalement à distance.

La fonction de cet agencement 40 est de provoquer le déplacement transversal, simultané et identique des coulisseaux 22 des moyens 13, et par conséquent des vantaux 4.

La poutre de suspension 17 présente des moyens d'assemblage d'éléments modulaires, grâce auxquels il est possible de conformer le dispositif opérateur à l'aide d'éléments choisis, selon la porte 3 de destination.

Avec des constituants d'un dispositif opérateur prédéterminé et unique, il est ainsi possible d'obtenir des portes 3 diverses, avec un ou plusieurs vantaux 4 ou encore avec des dimensions de vantail différentes.

Les figures 1 et 2 montrent que la porte 3 selon l'invention est équipée à proximité d'un bord supérieur de baie 5, du dispositif opérateur tel qu'évoqué plus haut.

Dans certaines portes, le dispositif opérateur est disposé à proximité d'un bord inférieur de la baie 5.

La porte 3 comporte également des moyens de conjugaison 48 qui relient le bord longitudinal supérieur d'un vantail 4 à un bord opposé en élévation dit bord inférieur.

Sur ces figures, les moyens comportent une tige rigide d'élévation 49, reliée par des leviers 50 pourvus de galets 19 respectivement à des rampes longitudinales 8 solidaires respectivement d'un bord du vantail 4 à conjuguer.

Des modes de réalisation non représentés prévoient de remplacer la tige rigide d'élévation 49 par un système flexible.

Décrivons maintenant un dispositif 53 d'accrochage de vantail 4.

Il permet cet accrochage pour divers types de portes, manuelles ou motorisées, avec des trajectoires de vantail variées.

Le dispositif 53 permet l'accrochage d'un vantail 4 ici louvoyant-coulissant, destiné à une porte 3 d'obturation de la baie 5 ménagée dans la paroi 2.

Il comporte un système unitaire de positionnement 25 du vantail 4, visible sur la figure 3 notamment.

Le système 25 est pourvu :
- d'une part de moyens 9 de solidarisation du système 25 à une partie mobile de moyens de suspension 17, eux-mêmes destinés à être ancrés au véhicule 1 ; et
- d'autre part de moyens 10 d'accrochage du vantail 4 aptes à supporter ce dernier sur le système 25 dans une position prédéterminée stable.

Une fois le système 25 monté et ajusté sur les moyens 17, le vantail 4 correspondant peut être soutenu dans sa position de montage, à la façon d'un vêtement sur un porte-manteaux.

Des moyens d'immobilisation 15, par exemple démontables, sont ensuite employés pour maintenir le vantail 4 dans cette position.

Le système d'accrochage 25 est, sur la figure 3, une pièce monobloc, constituée ici par un profilé en aluminium extrudé.

Sur ce système 25, les moyens d'accrochage 10 du vantail 4 comprennent au moins
- une face 20 formant appui, sensiblement longitudinale et transversale, ici supérieure ; et
de part et d'autre de la face d'appui 20, deux plans 21 de localisation transversale sensiblement longitudinaux et d'élévation, à distance transversalement de la face d'appui 20.

Un plan 21 est tourné vers l'extérieur, l'autre vers l'intérieur. Il s'agit donc de deux plans de localisation opposés transversalement.

Sur la figure 3, la face d'appui 20 fait saillie en élévation des deux plans de localisation 21 en formant un tenon 23 destiné à être reçu par une gorge complémentaire du vantail 4.

Les plans 21 et la face 20 définissent perpendiculairement à la direction L, une section rectangulaire du tenon 23.

Dans une autre réalisation non représentée, les deux plans de localisation transversale font saillie en élévation de la face d'appui, en formant une gorge destinée à recevoir un tenon complémentaire du vantail 4.

Evidemment, plusieurs gorge et/ou tenon sont combinés dans des réalisations du système 25.

De même que la section des gorge et/ou tenon est trapézoïdale dans des modes de réalisation. Alors, l'ouverture de la gorge est la grande base du trapèze, tandis que le sommet du tenon est la petite.

La figure 3 montre que les moyens 9 de solidarisation du système d'accrochage 25 comprennent une forme longitudinale 24 de localisation transversale et d'élévation, à distance transversalement d'une enveloppe intérieure du vantail 4.

La forme de localisation 24 est apte à être logée dans une partie sensiblement complémentaire 27.

Plus précisémment, la partie complémentaire 27 est ici une rainure concave longitudinale, formée dans la face extérieure d'un rail mobile des moyens de guidage 14.

Ce rail mobile est dans cette réalisation, guidé dans le rail en "U" dit fixe, ou poutre, des moyens de suspension 17.

Des moyens 28 de mise à demeure, par exemple démontables, par exemple des vis trasversales, assurent le maintien de l'assemblage de chaque système 25 de la porte 3, avec le rail mobile correspondant.

Dans un exemple, la forme longitudinale 24 de localisation est saillante, intérieure et apte à être logée dans une cavité complémentaire d'une face externe d'un rail de glissière téléscopique monté sur les moyens de suspension.

Décrivons les moyens d'immobilisation 15 du système de positionnement 25.

Ils comportent ici une surface 29 d'élévation intérieure, sensiblement au droit transversalement de l'enveloppe intérieure 26 du vantail 4.

Dans un exemple des orifices transversaux sont ménagés dans la surface 29 en vue de l'engagement de vis de serrage.

Quant à la porte 3, son vantail 4 comporte :
- une gorge 23 et/ou un tenon, complémentaire aux moyens d'accrochage 10 ;
- ainsi qu'une surface de fixation 31 coopérant avec les moyens d'immobilisation 15 du système 25 de positionnement.

On remarque que le système 25 de positionnement comporte en outre une gouttière 30 longitudinale, sensiblement en forme de "U" et débouchant suivant la direction d'élévation E.

Ici, cette gouttière 30 est orientée vers le bas en formant un "U" renversé, et elle constitue la rampe supérieure 8 du vantail visible sur la figure 3.

Cette gouttière 30 ou rampe 8 est donc destinée à recevoir au moins un galet 19 à l'extrémité libre transversale extérieure d'un levier 50.

Elle fait ainsi partie des moyens de guidage 14 et des moyens 48 de conjugaison de bords longitudinaux inférieur et supérieur du vantail 4.

Le vantail 4 forme ici un panneau d'obturation, dépourvu de moyens de guidage supérieurs 14 propres, ceux-ci étant intégrés au système 25.

Sur la figure 3, par exemple, ce vantail 4 comprend un cadre en profilés d'aluminium sur lequel est montée une vitre 33.

L'invention est combinée, dans le mode de réalisation illustré, avec une structure modulaire et monobloc qui intègre les fonctions de :
- suspension ;
- motorisation ;
- entraînement en translation ;
- entraînement en louvoiement ; et
- verrouillage.

On a vu que des réglages étaient possibles lors de la construction en usine de la porte 3 et du dispositif opérateur.

Bien sûr, le réglage du positionnement du dispositif opérateur avec les vantaux 4 sur le véhicule 1, ainsi que du parallélisme des vantaux 4 avec les montants de la baie 5, restent à effectuer lors du montage de la porte 3 sur le véhicule 1.

L'invention garde ses avantages aussi bien pour une porte à un ou à deux vantaux.

Notons en outre que le dispositif opérateur est muni d'une traverse, ici constituée par le système 25, fixée sur l'élément final de la glissière télescopique de suspension.

C'est à cette traverse qu'est relié un élément d'entraînement en translation (courroie, vis, etc).

Elle assure donc une interface majeure avec le dispositif opérateur.

Cela a pour avantage de permettre un démontage et un montage des vantaux 4, sans affecter ses principaux réglages.

En cas d'incident par exemple, la rupture d'une vitre collée sur le cadre en profilé d'aluminium, n'oblige pas à une immobilisation longue puisque le vantail 4 peut être échangé rapidement.

Cette opération de montage/démontage est également facilitée par le dispositif d'accrochage qui permet une intervention par un seul opérateur, alors que les structures connues obligeaient à prévoir au moins deux opérateurs pour le montage ou le démontage d'un vantail.

## Revendications

1. Dispositif d'accrochage (53) d'au moins un vantail (4) par exemple louvoyant-coulissant, destiné à une porte d'obturation d'une baie (5) ménagée dans une paroi (2) de véhicule (1) ferroviaire, et comprenant un système unitaire de positionnement (25) du vantail (4),
**caractérisé en ce que**
ce système unitaire de positionnement (25) est solidarisé d'une part par des moyens (9) à une partie mobile de moyens de suspension (17), eux-mêmes destinés à être ancrés au véhicule (1) et supporte d'autre part, le vantail dans une position prédéterminée stable par des moyens d'accrochage (10), lesquels comprennent une face supérieure (20) sensiblement longitudinale et transversale et formant appui,
et comporte, de part et d'autre de cette face, deux plans de localisation transversale (21) sensiblement longitudinaux et d'élévation, à distance transversalement de la face (20) d'appui;
ainsi que des moyens d'immobilisation (15), par exemple démontables, du vantail (4) dans cette position.

2. Dispositif (53) selon la revendication 1, **caractérisé en ce que** le système d'accrochage (25) est une pièce monobloc, telle qu'un profilé en aluminium extrudé.

3. Dispositif (53) selon l'une des revendications 1 ou 2, **caractérisé en ce que** les moyens d'accrochage (10) du vantail (4) comprennent sur la face (20) d'appui, qui fait saillie en élévation d'au moins un plan (21) de localisation transversale, un tenon (23) destiné à être reçu par une gorge complémentaire du vantail (4) et/ou au moins un plan (21) de localisation fait saillie en élévation de la face (20) d'appui en formant une gorge destinée à recevoir une saillie complémentaire formant tenon du vantail (4).

4. Dispositif (53) selon l'une des revendications 1 ou 3, **caractérisé en ce que** les moyens de solidarisation (9) du système d'accrochage (25) comprennent au moins :
une forme (24) longitudinale de localisation transversale et/ou d'élévation, à distance transversalement d'une enveloppe (26) intérieure du vantail (4) et apte à être logée dans et/ou à recevoir une partie (27) sensiblement complémentaire des moyens (17) de suspension du vantail (4), ainsi que des moyens (28 )de mise à demeure, par exemple démontables ;
par exemple la forme (24) longitudinale de localisation est saillante, intérieure et apte à être logée dans une cavité complémentaire d'une face externe d'un rail de glissière téléscopique monté sur les moyens de suspension (17), tandis que les moyens de mise à demeure (28) comprennent des vis transversales.

5. Dispositif (53) selon l'une des revendications 1 ou 4, **caractérisé en ce que** les moyens d'immobilisation (15) du système de positionnement (25) comportent une surface (29) d'élévation intérieure, sensiblement au droit transversalement d'une enveloppe (26) intérieure du vantail (4) ;
et par exemple avec des orifices transversaux en vue de l'engagement de vis de serrage.

6. Dispositif (53) selon l'une des revendications 1 à 5, **caractérisé en ce que** le système (25) de positionnement comporte en outre au moins une gouttière (30) longitudinale, sensiblement en forme de "U" et débouchant suivant une direction d'élévation, par exemple vers le bas pour un "U" renversé ;
cette gouttière (30) étant destinée à recevoir au moins un galet (19) à l'extrémité libre transversale extérieure d'un levier (50) de moyens de guidage (13) par exemple pour la conjugaison de bords longitudinaux inférieur et supérieur du vantail (4).

7. Porte (3) équipée d'au moins un dispositif (53) d'accrochage (53) selon l'une des revendications 1 à 6,
**caractérisée en ce que** le vantail (4) comporte au moins :
un tenon (23) et/ou une gorge complémentaire aux moyens d'accrochage (10) ;
ainsi qu'une surface (31) de fixation coopérant avec les moyens d'immobilisation (15) du système de positionnement (25).

8. Porte (3) selon la revendication 7, **caractérisée en ce qu'**elle comporte au moins un vantail (4) formant panneau d'obturation, par exemple ce vantail (4) comprend un cadre (32) en profilés d'aluminium et/ou une vitre (32).

9. Porte (3) selon la revendication 7 ou 8, **caractérisée en ce qu'**elle est motorisée et comporte un dispositif opérateur comportant les moyens de suspension (17), des moyens (13, 14) de guidage longitudinal et/ou transversal, et éventuellement des moyens (6) de motorisation du vantail (4).

10. Porte (3) selon la revendication 9, **caractérisée en ce que** les moyens de solidarisation (9) du système de positionnement (25) sont mis à demeure, par exemple de manière démontable, sur une partie mobile du dispositif opérateur, par exemple sur un rail de glissière téléscopique.

11. Porte (3) selon l'une des revendications 7 à 10, **caractérisée en ce qu'**elle est louvoyante-coulissante et comprend en outre des moyens de guidage d'au moins un bord longitudinal du vantail (4) ;
par exemple des moyens de conjugaison (48) relient les moyens de guidage d'un bord longitudinal du vantail (4) tel que supérieur, à un bord opposé en élévation tel qu'inférieur, ces moyens (48) possédant une tige rigide d'élévation (49) et/ou un système flexible.

12. Porte (3) selon l'une des revendications 7 à 11, **caractérisée en ce qu'**il s'agit d'une porte (3) à double vantail (4), chacun étant accroché à un système de positionnement (25) propre.

13. Véhicule ferroviaire (1), **caractérisé en ce qu'**il est équipé d'au moins un dispositif (53) selon l'une des revendications 1 à 6 et/ou une porte (3) selon l'une des revendications 7 à 12.

## Claims

1. Device (53) for attaching at least one leaf (4), for example rotating/sliding, intended for a door for closing off an opening (5) provided in a wall (2) of a railway vehicle (1) and comprising a unitary system (25) for positioning the leaf (4),
**characterised in that**
this unitary positioning system (25) is fixed on the one hand by means (9) to a movable part of suspension means (17), themselves intended to be anchored on the vehicle (1), and on the other hand supports the leaf in a predetermined stable position by means of attachment means (10), which comprise a substantially longitudinal and transverse top face (20) forming a support,
and has, on each side of this face, two substantially longitudinal and vertical transverse location surfaces (21), at a distance transversely from the support face (20);
and means (15), for example removable, for immobilising the leaf (4) in this position.

2. A device (53) according to Claim 1, **characterised in that** the attachment system (25) is a single-piece item, such as a profiled section made from extruded aluminium.

3. A device (53) according to one of Claims 1 or 2, **characterised in that** the attachment means (10) for the leaf (4) comprise, on the support face (20), which projects vertically from at least one transverse location surface (21), a tenon (23) intended to be received by a complementary groove in the leaf (4) and/or at least one location surface (21) projects vertically from the support face (20) whilst forming a groove intended to receive a complementary projection forming a tenon on the leaf (4).

4. A device (53) according to one of Claims 1 or 3, **characterised in that** the means (9) of fixing the attachment system (25) comprise at least:
a longitudinal transverse and/or upright location shape (24), at a distance transversely from an internal enclosure (26) of the leaf (4) and able to be housed in and/or to receive a substantially complementary part (27) of the means (17) of suspending the leaf (4) as well as fixing means (28), for example removable;
for example the longitudinal location shape (24) is projecting, internal and able to be housed in a complementary cavity in an external face of a telescopic slide rail mounted on the suspension means (17), whilst the fixing means (28) comprise transverse screws.

5. A device (53) according to one of Claims 1 or 4, **characterised in that** the means (15) of immobilising the positioning system (25) have an internal vertical surface (29), substantially in line transversely with an internal envelope (26) of the leaf (4);
and for example with transverse orifices with a view to the engagement of clamping screws.

6. A device (53) according to one of Claims 1 to 5, **characterised in that** the positioning system (25) also includes at least one longitudinal channel (30), substantially in the shape of a U and opening out in a vertical direction, for example downwards for an inverted U;
this channel (30) being intended to receive at least one roller (19) at the external transverse free end of a lever (50) of guidance means (13) for example for the joining of bottom and top longitudinal edges of the leaf (4).

7. A door (3) equipped with at least one attachment device (53) according to one of Claims 1 to 6, **characterised in that** the leaf (4) has at least:
one tenon (23) and/or one groove complementary to the attachment means (10);
and a fixing surface (31) cooperating with the means (15) of immobilising the positioning system (25).

8. A door (3) according to Claim 7, **characterised in that** it has at least one leaf (4) forming a closure panel, for example this leaf (4) comprises a frame (32) made from aluminium profiled sections and/or a window (32).

9. A door (3) according to Claim 7 or 8, **characterised in that** it is motorised and has an operating device including the suspension means (17), means (13, 14) of longitudinal and/or transverse guidance, and possibly means (6) of motorisation of the leaf (4).

10. A door (3) according to Claim 9, **characterised in that** the means (9) of fixing the positioning system (25) are made permanent, for example in a demountable fashion, on a movable part of the operating device, for example on a telescopic slide rail.

11. A door (3) according to one of Claims 7 to 10, **characterised in that** it is rotating/sliding and also comprises means of guiding at least one longitudinal edge of the leaf (4) ;
for example joining means (48) connecting the means of guiding a longitudinal edge of the leaf (4) such as the upper one, to an opposite elevation edge such as a lower one, these means (48) having a rigid vertical rod (49) and/or a flexible system.

12. A door (3) according to one of Claims 7 to 11, **characterised in that** it is a door (3) with a double leaf (4), each being attached to its own positioning system (25).

13. A railway vehicle (1), **characterised in that** it is equipped with at least one device (53) according to one of Claims 1 to 6 and/or a door (3) according to one of Claims 7 to 12.

## Patentansprüche

1. Einhängevorrichtung (53) mindestens eines beispielsweise verschiebbaren Türflügels (6) für eine Verschlusstür einer in einer Wand (2) eines Eisenbahnfahrzeugs (1) vorgesehenen Öffnung (5), mit einem einheitlichen Positioniersystem (25) des Türflügels (4), **dadurch gekennzeichnet, dass** dieses einheitliche Positioniersystem (25) einerseits mit Mitteln (9) an einem mobilen Teil von Hängemitteln (17) befestigt wird, die ihrerseits am Fahrzeug (1) verankert werden sollen, und andererseits den Türflügel mit Einhängemitteln (10) in einer vorbestimmten festen Position trägt, die eine etwa in Längs- und Querrichtung verlaufende obere Fläche (20) aufweisen, die eine Stütze bildet, und dass es auf beiden Seiten dieser Fläche etwa in Längsrichtung, quer zur Stützfläche (20) verlaufende Quer- und Höhenbegrenzungsebenen (21) aufweist, sowie beispielsweise demontierbare Verriegelungsmittel (15) des Türflügels (4) in dieser Position.

2. Vorrichtung (53) nach Anspruch 1, **dadurch gekennzeichnet, dass** das Einhängesystem (25) ein Monoblock-Teil wie ein stranggepresstes Aluminiumprofil ist.

3. Vorrichtung (53) nach einem der Ansprüche 1 oder 2, **dadurch gekennzeichnet, dass** die Einhängemittel (10) des Türflügels (4) auf der Stützfläche (21), die aus mindestens einer quer verlaufenden Begrenzungsebene (21) nach oben herausragt, einen Zapfen (23) aufweisen, der in einen ergänzenden Hals des Türflügels (4) eingeführt werden soll, und/oder mindestens eine Begrenzungsebene (21) ragt nach oben aus der Stützfläche (20) heraus und bildet dabei einen Hals, der einen ergänzenden, den Zapfen des Türflügels (4) bildenden Vorsprung aufnehmen soll.

4. Vorrichtung (53) nach einem der Ansprüche 1 oder 3, **dadurch gekennzeichnet, dass** die Befestigungsmittel (9) des Einhängesystems (25) mindestens:
eine in Längsrichtung verlaufende Quer- und/oder Höhenbegrenzungsform (24) umfassen, in einem Querabstand eines Innenmantels (26) des Fensterflügels, die dazu geeignet ist, in Aufhängemittel (17) des Türflügels (4) eingeführt zu werden und/oder einen etwa ergänzenden Teil derselben aufnehmen zu können, sowie beispielsweise demontierbare Festhaltemittel (28) ;
wobei zum Beispiel die in Längsrichtung verlaufende Begrenzungsform (24) auskragend, intern und geeignet ist, in einem ergänzenden Hohlraum einer externen Fläche einer teleskopischen, auf Aufhängemitteln (17) montierten Gleitschiene eingeführt zu werden, während die Festhaltemittel (28) Querschrauben umfassen.

5. Vorrichtung (53) nach einem der Ansprüche 1 oder 4, **dadurch gekennzeichnet, dass** die Verriegelungsmittel (15) des Positioniersystems (25) eine interne, etwa lotrecht zu einem internen Mantel (26) des Türflügels (4) verlaufende Elevationsfläche (29) umfassen;
und beispielsweise mit Queröffnungen für die Einführung von Klemmschrauben.

6. Vorrichtung (53) nach einem der Ansprüche 1 bis 5, **dadurch gekennzeichnet, dass** das Positioniersystem (25) im übrigen mindestens eine in Längsrichtung verlaufende, etwa "U"-förmige Rinne (30) umfasst, die entsprechend einer Elevationsrichtung mündet, beispielsweise nach unten bei einem umgekehrten "U";
wobei diese Rinne (30) mindestens eine Rolle (19) am freien externen Querende eines Hebels (50) von Führungsmitteln (13) aufnehmen soll, beispielsweise für die Zusammenfügung von unteren und oberen Längskanten des Türflügels (4).

7. Tür (3), ausgerüstet mit mindestens einer Einhängvorrichtung (53) nach einem der Ansprüche 1 bis 6, **dadurch gekennzeichnet, dass** der Türflügel (4) mindestens:
einen Zapfen (23) und/oder einen ergänzenden Hals an den Einhakmittel (10) umfasst;
sowie eine Befestigungsfläche (31), die mit den Verriegelungsmitteln (15) des Positioniersystems (25) zusammenwirkt.

8. Tür (3) nach Anspruch 7, **dadurch gekennzeichnet, dass** sie mindestens einen Türflügel (4) umfasst, der eine Verschlussplatte bildet, wobei dieser Türflügel (4) beispielsweise einen Rahmen (32) aus Aluminiumprofil und/oder eine Fensterscheibe (32) umfasst.

9. Tür (3) nach Anspruch 7 oder 8, **dadurch gekennzeichnet, dass** sie motorisiert ist und eine Bedienungsvorrichtung aufweist, die die Aufhängemittel (17), Längs- und/oder Querführungsmittel (13, 14) und eventuell Motorisierungsmittel (6) des Türflügels (4) umfasst.

10. Tür (3) nach Anspruch 9, **dadurch gekennzeichnet, dass** die Befestigungsmittel (9) des Positioniersystems (25) beispielsweise demontierbar an einem mobilen Teil der Bedienungsvorrichtung, beispielsweise auf einer teleskopischen Gleitschiene, festgehalten werden.

11. Tür (3) nach einem der Ansprüche 7 bis 10, **dadurch gekennzeichnet, dass** sie verschiebbar ist und im übrigen Führungsmittel von mindestens einer Längskante des Türflügels (4) umfasst;
beispielsweise verbinden Verbindungsmittel (48) die Führungsmittel einer Längskante des Türflügels (4), wie beispielsweise der oberen, mit einer erhöht gegenüberliegenden Kante, wie beispielsweise der unteren, wobei diese Mittel (48) eine starre Elevationsstange (49) und/oder ein flexibles System aufweisen.

12. Tür (3) nach einem der Ansprüche 7 bis 11, **dadurch gekennzeichnet, dass** es sich um eine Tür (3) mit doppeltem Türflügel (4) handelt, wobei jeder in seinem eigenen Positioniersystem (25) eingehängt ist.

13. Eisenbahnfahrzeug (1), **dadurch gekennzeichnet, dass** es mit mindestens einer Vorrichtung (53) nach einem der Ansprüche 1 bis 6 und/oder mit einer Tür (3) nach einem der Ansprüche 7 bis 12 ausgerüstet ist.
